# EUROPEAN PATENT APPLICATION

(11) **EP 4 835 162 A1**
(43) Date of publication of application: **04.11.2026**
(21) Application number: 24912153.4
(22) Date of filing: 26.11.2024
(51) Int. Cl.: C25B 15/00, C25B 1/04, C25B 9/00, C25B 9/23, C25B 9/77

(54) **WATER ELECTROLYSIS DEVICE AND OPERATION CONTROLLING METHOD FOR WATER ELECTROLYSIS DEVICE**

(30) Priority: 28.12.2023 JP 2023222753
(71) Applicant: Toyota Motor Kyushu, Inc., Miyawaka-shi, Fukuoka 823-0015 (JP); Kyushu University, National University Corporation, Nishi-ku Fukuoka-shi Fukuoka 819-0395 (JP)
(72) Inventor: SUSUKI, Katsushi, Miyawaka-shi, Fukuoka 823-0015 (JP); ITO, Akari, Fukuoka-shi, Fukuoka 819-0395 (JP)
(74) Representative: Winter, Brandl - Partnerschaft mbB
(86) International application number: PCT/JP2024/041725
(87) International publication number: WO 2025/142261

(57) **Abstract**

To provide a water electrolysis device and an operation control method of a water electrolysis device that can curb energy consumption during shutdown and mitigate deterioration of an electrolyte membrane due to hydrogen peroxide generated inside a cathode-side hydrogen flow passage during shutdown, an operation control method of a water electrolysis device having one or more water electrolysis cells that each have an anode-side oxygen flow passage (5) and a cathode-side hydrogen flow passage (6) separated from each other by an electrolyte membrane, and that electrically decompose pure water supplied to the oxygen flow passage (5) and discharge hydrogen from the hydrogen flow passage (6) includes: during operation of the water electrolysis device, supplying pure water to the oxygen flow passage (5); and during shutdown of the water electrolysis device, stopping the supply of the pure water to the oxygen flow passage (5), and after supplying the pure water to the hydrogen flow passage (6) for a predetermined time and discharging the pure water to an outside, stopping the supply of the pure water to the hydrogen flow passage (6).

## Description

### Technical Field

The present disclosure relates to a water electrolysis device and an operation control method of a water electrolysis device that can curb energy consumption during shutdown and mitigate deterioration of an electrolyte membrane due to hydrogen peroxide generated inside a cathode-side hydrogen flow passage during shutdown.

### Background Art

There is a known water electrolysis device that has an anode side and a cathode side separated from each other by an electrolyte membrane of solid polymer or the like as a partition membrane, and that supplies pure water to the anode side while electrically decomposing the pure water and thereby generates oxygen from the anode side and hydrogen from the cathode side (e.g., see Patent Literature 1).

### Citation List

### Patent Literature

PTL 1: Japanese Unexamined Patent Application Publication No. 2003-293179 (JP 2003-293179 A)

### Summary of Invention

### Technical Problem

In a water electrolysis device, a plurality of water decomposition cells is stacked. During operation, pure water is supplied to an anode-side oxygen flow passage of each water decomposition cell, and the pure water is decomposed by a reaction of 2H₂O → O₂ + 4H⁺ + 4e⁻ and oxygen is generated in the oxygen flow passage. Meanwhile, H⁺ gets into a cathode-side hydrogen flow passage through an electrolyte membrane and undergoes a reaction of 4H⁺ + 4e⁻ → 2H₂ to generate hydrogen.

When the water electrolysis device shuts down and the supply of pure water to the oxygen flow passage stops, part of the oxygen generated in the oxygen flow passage moves into the hydrogen flow passage through the electrolyte membrane and binds to hydrogen remaining inside the hydrogen flow passage to generate hydrogen peroxide. From this hydrogen peroxide, for example, hydroxyl radical (HO*) is generated by a reaction of H₂O₂ + Fe₂⁺ → HO* + OH⁻ + Fe₃⁺. Hydroxyl radical is an electrically unstable, highly reactive radical molecule, and makes an attack such as uncoupling a polymer chain of the electrolyte membrane, thereby causing a phenomenon of the electrolyte membrane becoming damaged and deteriorating.

Shutdown of a water electrolysis device occurs frequently especially when a solar power generation device or a wind power generation device that depends on weather is used as the power source, or when the environment is such that a state is likely to arise where an amount stored in a hydrogen storage tank that compresses and stores hydrogen generated in the water electrolysis device nearly fills up the tank. In such a case, chances for generation of hydrogen peroxide increase, leading to further damage and deterioration of the electrolyte membrane.

In Patent Literature 1, pure water is kept flowing to both the anode side and the cathode side to prevent elution of metal ions from a pipe on the cathode side during shutdown, and thus a large amount of energy is consumed in the shutdown state.

The present invention has been developed to solve the above-described problem, and an objective thereof is to provide a water electrolysis device and an operation control method of a water electrolysis device that can curb energy consumption during shutdown and mitigate deterioration of an electrolyte membrane due to hydrogen peroxide generated inside a cathode-side hydrogen flow passage during shutdown.

### Solution to Problem

A water electrolysis device according to the present invention to solve the above-described problem and achieve the objective is a water electrolysis device having one or more water electrolysis cells that each have an anode-side oxygen flow passage and a cathode-side hydrogen flow passage separated from each other by an electrolyte membrane, and that electrically decompose pure water supplied to the oxygen flow passage and discharge hydrogen from the hydrogen flow passage. The water electrolysis device includes a feedwater pump that delivers pure water, an oxygen-side supply pipe that supplies pure water from the feedwater pump to the oxygen flow passage through a first on-off valve, a hydrogen-side supply pipe that supplies pure water from the feedwater pump to the hydrogen flow passage through a second on-off valve, and a controller that performs control that: during operation of the water electrolysis device, drives the feedwater pump and opens the first on-off valve while closing the second on-off valve to supply pure water to the oxygen flow passage through the oxygen-side supply pipe; and during shutdown of the water electrolysis device, closes the first on-off valve while opening the second on-off valve to stop the supply of the pure water to the oxygen flow passage through the oxygen-side supply pipe, and after supplying the pure water to the hydrogen flow passage through the hydrogen-side supply pipe for a predetermined time and discharging the pure water to an outside, stops the supply of the pure water to the hydrogen flow passage through the hydrogen-side supply pipe.

The water electrolysis device according to the present invention is the above-described invention, wherein a third on-off valve is provided on a hydrogen-side discharge pipe that connects an outlet side of the hydrogen flow passage; an external discharge pipe is connected between the outlet side of the hydrogen flow passage and the third on-off valve; and a fourth on-off valve is provided on the external discharge pipe, and wherein when supplying the pure water to the hydrogen flow passage during the shutdown, the controller switches the third on-off valve from an open position to a closed position and switches the fourth on-off valve from a closed position to an open position to discharge the pure water from the external discharge pipe to the outside.

The water electrolysis device according to the present invention is the above-described invention, wherein an oxygen-side discharge pipe connected to an outlet side of the oxygen flow passage is connected to an oxygen-side gas-liquid separator, and oxygen is discharged through the oxygen-side gas-liquid separator; wherein a hydrogen-side discharge pipe connected to an outlet side of the hydrogen flow passage is connected to a hydrogen-side gas-liquid separator, and hydrogen is discharged through the hydrogen-side gas-liquid separator; and wherein pure water supplied to the water electrolysis cells through the oxygen-side gas-liquid separator and the hydrogen-side gas-liquid separator circulates.

The water electrolysis device according to the present invention is the above-described invention, wherein a plurality of water decomposition units that is stacked is connected in series to the water electrolysis cells.

The water electrolysis device according to the present invention is the above-described invention, wherein a power source of the water decomposition cells is a solar power generation device or a wind power generation device; wherein hydrogen discharged from the water decomposition cells is stored in a hydrogen storage tank; and wherein the controller shuts down the water electrolysis device when a power shortage of power generated by the solar power generation device or the wind power generation device occurs or when a remaining amount in the hydrogen storage tank is equal to or larger than a predetermined amount.

An operation control method of a water electrolysis device according to the present invention is an operation control method of a water electrolysis device having one or more water electrolysis cells that each have an anode-side oxygen flow passage and a cathode-side hydrogen flow passage separated from each other by an electrolyte membrane, and that electrically decompose pure water supplied to the oxygen flow passage and discharge hydrogen from the hydrogen flow passage, the operation control method including:
during operation of the water electrolysis device, supplying pure water to the oxygen flow passage; and during shutdown of the water electrolysis device, stopping the supply of the pure water to the oxygen flow passage, and after supplying the pure water to the hydrogen flow passage for a predetermined time and discharging the pure water to an outside, stopping the supply of the pure water to the hydrogen flow passage.

### Advantageous Effects of Invention

The present invention can curb energy consumption during shutdown and mitigate deterioration of an electrolyte membrane due to hydrogen peroxide generated inside a cathode-side hydrogen flow passage during shutdown.

### Brief Description of Drawings

[FIG. 1] FIG. 1 is a view showing the concept of a water electrolysis device and an operation control method of a water electrolysis device according to an embodiment.
[FIG. 2] FIG. 2 is a front view schematically showing a configuration and a stacked positional relationship of water decomposition cells composing the water electrolysis device.
[FIG. 3] FIG. 3 is a sectional view along line A-A of a separator shown in FIG. 2.
[FIG. 4] FIG. 4 is a block diagram showing a configuration of the water electrolysis device.
[FIG. 5] FIG. 5 is a flowchart showing an operation control procedure of a water electrolysis device 10 performed by a controller C.

### Description of Embodiments

In the following, a water electrolysis device and an operation control method of a water electrolysis device according to an embodiment will be described with reference to the accompanying drawings.

### <Overview>

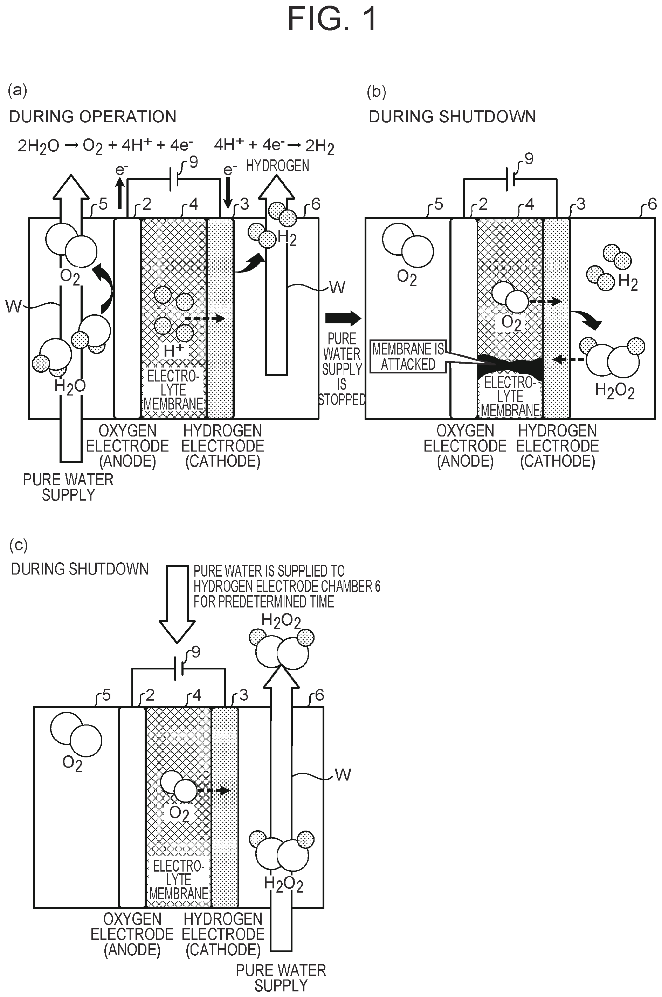

FIG. 1 is a view showing the concept of a water electrolysis device 10 and an operation control method of the water electrolysis device 10 according to an embodiment. As shown in FIG. 1, in a water decomposition cell 1, an electrolyte layer 4 is interposed between an anode-side oxygen electrode 2 and a cathode-side hydrogen electrode 3, and the oxygen electrode 2 and the hydrogen electrode 3 are separated from each other by the electrolyte layer 4. On the anode side, an oxygen flow passage 5 is formed to which pure water for water decomposition is supplied and from which the pure water containing oxygen resulting from water decomposition is discharged. Hydrogen ions that have been generated in the oxygen flow passage 5 and have penetrated through the electrolyte layer 4 turn into hydrogen on the cathode side. On the cathode side, a hydrogen flow passage 6 is formed from which the pure water containing this hydrogen is discharged.

FIG. 1 (a) shows a state of the water electrolysis device 10 during operation. During operation of the water electrolysis device 10, pure water is supplied to the oxygen flow passage 5, and the pure water containing oxygen is discharged from the oxygen flow passage 5 while the pure water containing hydrogen is discharged from the hydrogen flow passage 6. When the water electrolysis device 10 shuts down, as shown in FIG. 1 (b), mostly oxygen is present in the oxygen flow passage 5 and hydrogen is present in the hydrogen flow passage 6, which constitutes a state of open circuit voltage (OCV) in a fuel cell and the hydrogen electrode 3 assumes 0 V. In this state, when oxygen penetrates through the electrolyte layer 4 and moves to the hydrogen flow passage 6, hydrogen remaining inside the hydrogen flow passage 6 and the oxygen bind to each other to generate hydrogen peroxide. As described above, this hydrogen peroxide generates hydroxyl radical (HO*), which attacks the electrolyte layer 4 and perforates the electrolyte membrane, thereby degrading its function as a permeable membrane.

In this embodiment, therefore, as shown in FIG. 1 (c), during shutdown of the water electrolysis device 10, the supply of pure water to the oxygen flow passage 5 is stopped, while pure water is supplied to the hydrogen flow passage 6 for a predetermined time and discharged to an outside, and then the supply of pure water to the hydrogen flow passage 6 is stopped. As a result, hydrogen peroxide generated inside the hydrogen flow passage 6 is discharged to the outside of the water decomposition cell 1 by the pure water supplied into the hydrogen flow passage 6, which can mitigate deterioration of the electrolyte layer 4 as shown in FIG. 1 (b). The discharged pure water containing hydrogen peroxide should be discarded to the outside without being circulated. The predetermined time for which pure water is supplied to the hydrogen flow passage 6 is a time in which hydrogen peroxide inside the hydrogen flow passage 6 disappears, and should be set to, for example, a time in which pure water having a volume at least a few or more times the water volume inside the hydrogen flow passage 6 and containing hydrogen peroxide inside the hydrogen flow passage 6 is discarded. This predetermined time may be a time which is obtained by experiment etc. and in which hydrogen peroxide disappears from the inside of the hydrogen flow passage 6.

Thus, deterioration of the electrolyte layer 4 due to hydrogen peroxide during shutdown can be prevented. Moreover, energy consumption during shutdown can be curbed since pure water is not supplied to the oxygen flow passage 5 and pure water is supplied to the hydrogen flow passage 6 only for the predetermined time.

### <Configuration of Water Electrolysis Cell>

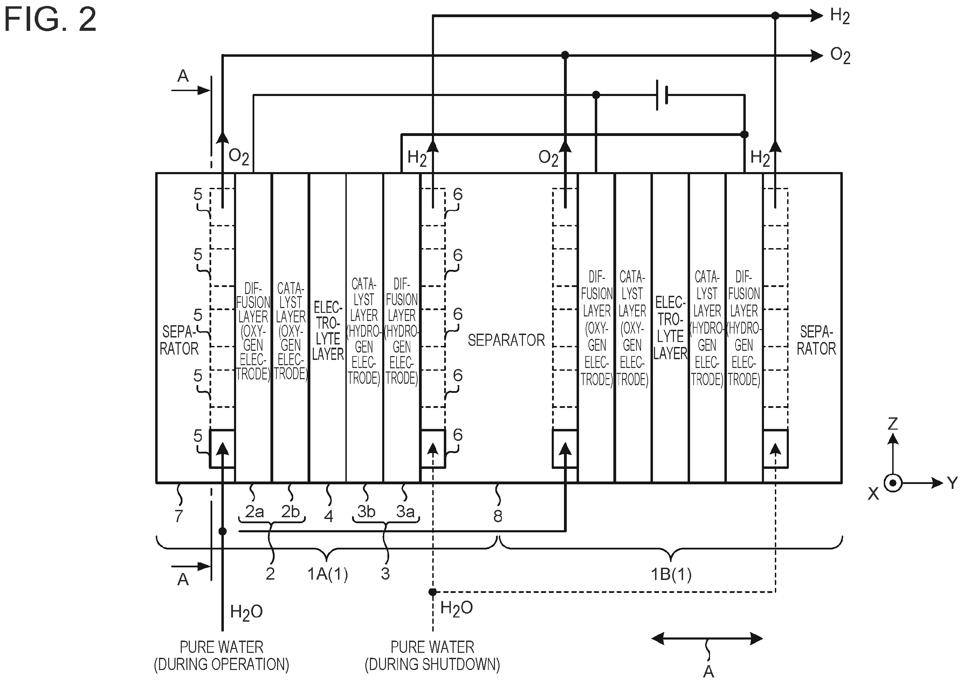

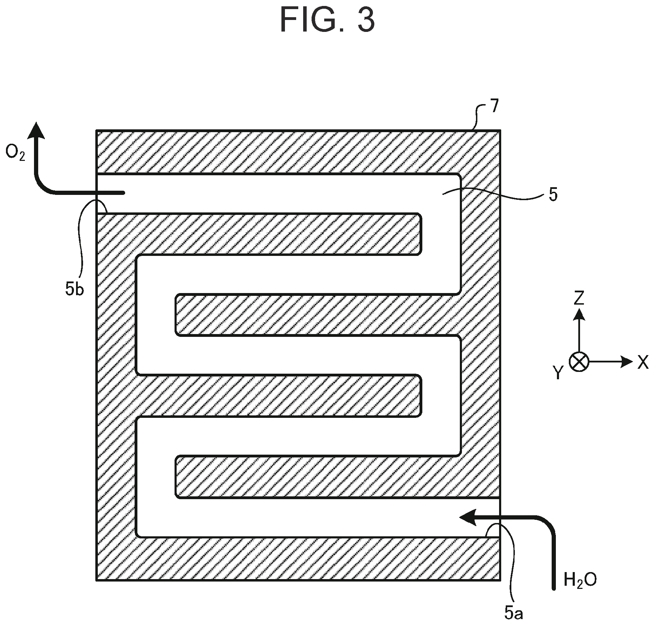

FIG. 2 is a front view schematically showing a configuration and a stacked positional relationship of water decomposition cells 1 composing the water electrolysis device 10. FIG. 3 is a sectional view along line A-A of a separator 7 shown in FIG. 2. As shown in FIG. 2, in a water decomposition cell 1A (1), a catalyst layer 2b is provided on the anode side of the electrolyte layer 4, and a catalyst layer 3b is provided on the cathode side of the electrolyte layer 4. On the anode side of the catalyst layer 2b, a diffusion layer 2a is provided. The diffusion layer 2a and the catalyst layer 2b function as an oxygen electrode 2. On the other face of the diffusion layer 2a, the separator 7 is provided, and on the side of the separator 7 facing the diffusion layer 2a, an oxygen flow passage 5 is formed. As shown in FIG. 3, the oxygen flow passage 5 forms a serpentine flow passage extending toward a +Z-direction in which flow passages extending in ±X-directions are connected to one another in a zig-zag manner from an inlet opening 5a through which pure water is supplied, and discharges oxygen through an outlet opening 5b at an opposite end. On the other hand, on the cathode side of the catalyst layer 3b, a diffusion layer 3a is provided. The diffusion layer 3a and the catalyst layer 3b function as a hydrogen electrode 3. On the other face of the diffusion layer 3a, a separator 8 is provided, and on the side of the separator 8 facing the diffusion layer 3a, the hydrogen flow passage 6 is formed. The hydrogen flow passage 6 forms a serpentine flow passage in which flow passages are connected to one another in a zig-zag manner toward the +Z-direction as with the oxygen flow passage 5, and discharges hydrogen. A water decomposition cell 1B (1) having the same configuration as the water decomposition cell 1A is stacked thereon in a right-left direction (an A-direction; +Y-directions) in the plane of the drawing. While FIG. 2 shows a stacked state of the two water decomposition cells 1A, 1B, normally several tens of water decomposition cells 1 are stacked to form a water decomposition unit. In the case where water decomposition cells 1 are stacked, the separator 8 functions as a separator between the water decomposition cell 1A (1) and the water decomposition cell 1B (1), and has the hydrogen flow passage 6 and the oxygen flow passage 5 integrally formed in its opposite faces. Such water decomposition units are connected in series. In the case where the water decomposition cells 1 are stacked, the separators 7, 8 may be alternately turned 90 degrees around a Y-axis to allow easy connection of the oxygen flow passage 5 and the hydrogen flow passage 6 to the outside.

The electrolyte layer 4 is a solid polymer electrolyte membrane and functions as a positive-ion permeable membrane. As the electrolyte layer 4, for example, Nafion (registered trademark, manufactured by DuPont de Nemours, Inc.) that is a fluorine-based polymer membrane, or Aciplex (trade name, manufactured by Asahi Kasei Corporation) that is a hydrocarbon-based polymer membrane can be used. The anode-side catalyst layer 2b contains, for example, an Ir/IrRuOX catalyst. The cathode-side catalyst layer 3b is of, for example, carbon containing a platinum catalyst. As the diffusion layer 2a and the diffusion layer 3a, a porous body such as a titanium fiber sintered compact or a titanium powder sintered compact with its surface plated with Au, Pt, or Ir can be used.

### <Configuration of Water Electrolysis Device>

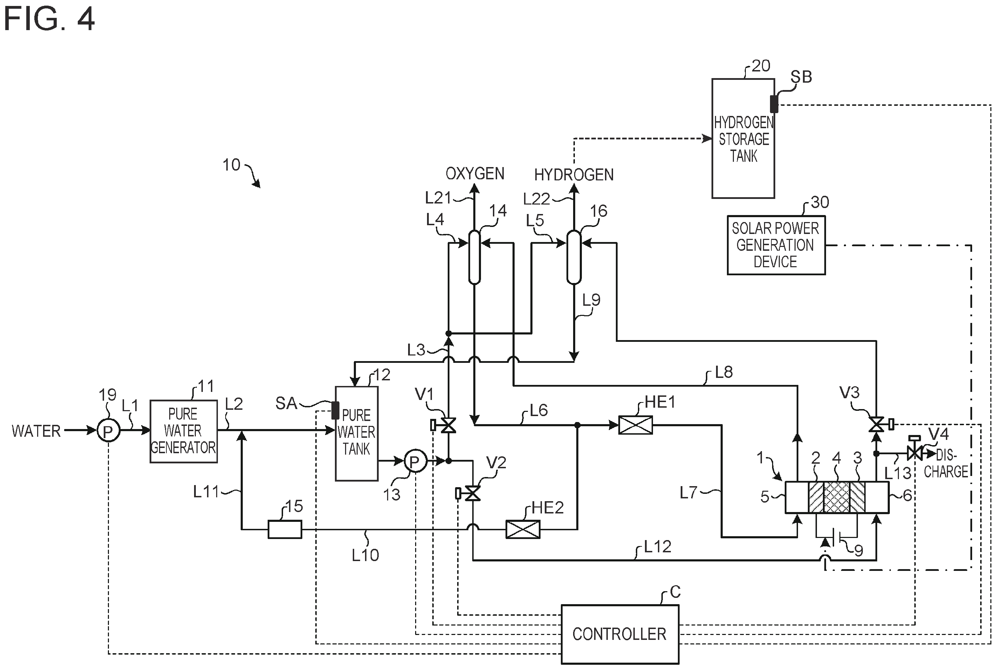

FIG. 4 is a block diagram showing a configuration of the water electrolysis device 10. The solid lines indicate a water circuit system and the broken lines indicate a control system. As shown in FIG. 4, water, such as industrial water, is supplied from a pipe L1 to a pure water generator 11 by being fed by a feedwater pump 19. The pure water generator 11 generates pure water using an activated carbon filter, a reverse osmosis membrane, an ion exchange membrane, or the like. The generated pure water is supplied to a pure water tank 12 through a pipe L2, and the pure water tank 12 stores the pure water.

The pure water inside the pure water tank 12 is fed by a feedwater pump 13 toward a pipe L3 or a pipe L12. During operation, an on-off valve V1 on the pipe L3 is open and an on-off valve V2 on the pipe L12 is closed, so that the pure water is supplied toward the pipe L3. The pipe L3 is branched into a pipe L4 and a pipe L5, which are connected such that the pure water in the pipe L4 is led out to an oxygen-side gas-liquid separator 14 while the pure water in the pipe L5 is led out to a hydrogen-side gas-liquid separator 16.

The pure water inside the oxygen-side gas-liquid separator 14 is supplied to the oxygen flow passage 5 through a pipe L6 and a pipe L7. A heat exchanger HE1 is interposed between the pipe L6 and the pipe L7, and a temperature rise of the pure water is inhibited using a coolant in a cooling tower. The pipes L3, L4, L6, L7 correspond to oxygen-side supply pipes.

Pure water containing oxygen that has been discharged from the oxygen flow passage 5 is led out to the oxygen-side gas-liquid separator 14 through a pipe L8, and the oxygen is discharged through a pipe L21 while the pure water is supplied to the oxygen-side supply pipe. The pipe L8 corresponds to an oxygen-side discharge pipe. A pipe L10 that branches off from the pipe L6 is connected to the pipe L6 to lead out the pure water to an ion exchanger 15. The ion exchanger 15 supplies pure water after removing impurities from the pure water to the pure water tank 12 through a pipe L11 and the pipe L2. Thus, the pure water supplied to the oxygen flow passage 5 circulates while impurities are removed therefrom. A heat exchanger HE2 on the pipe L10 inhibits a temperature rise of the pure water to be supplied to the ion exchanger 15. The heat exchanger HE2 uses the coolant in the cooling tower.

On the other hand, for pure water containing hydrogen that has been discharged from the hydrogen flow passage 6, a pipe (hydrogen-side discharge pipe) that connects an outlet side of the hydrogen flow passage 6 and the hydrogen-side gas-liquid separator 16 to each other is provided, and an on-off valve V3 is provided on this pipe. A pipe L13 is provided as an external discharge pipe that branches off from between the on-off valve V3 and the outlet side of the hydrogen flow passage 6. On the pipe L13, an on-off valve V4 is provided. During operation, the on-off valve V3 is open and the on-off valve V4 is closed. During shutdown, the on-off valve V3 is closed and the on-off valve V4 is open.

During operation, the pure water containing hydrogen that has been discharged from the hydrogen flow passage 6 is delivered to the hydrogen-side gas-liquid separator 16, and the hydrogen is led out toward a hydrogen storage tank 20 through a pipe L22. The pure water in the hydrogen-side gas-liquid separator 16 is returned to the pure water tank 12 through a pipe L9. Thus, the pure water from the hydrogen flow passage 6 also circulates.

On the other hand, during shutdown, the on-off valve V1 is closed, the on-off valve V2 is open, the on-off valve V3 is closed, and the on-off valve V4 is open, so that the pure water in the pure water tank 12 is supplied by the feedwater pump 13 from an inlet side of the hydrogen flow passage 6 through the pipe L12 for a predetermined time. The pure water containing hydrogen peroxide inside the hydrogen flow passage 6 is thereby discharged from the outlet side of the hydrogen flow passage 6 and discarded through the pipe L13. Driving of the feedwater pump 13 stops after the predetermined time. As a power source 9 of the water decomposition cells 1, power from a solar power generation device 30 is used. The power source 9 may instead be a wind power generation device.

The controller C performs overall control of the water electrolysis device 10. The controller C determines to shut down the water electrolysis device 10 when a power shortage of the power source 9 generated by the solar power generation device 30 occurs or when a remaining amount in the hydrogen storage tank 20 is equal to or larger than a predetermined amount that nearly fills up the tank. Shutdown may be shutdown from the outside. The controller C acquires the remaining amount in the hydrogen storage tank 20 based on a detection value of a remaining amount sensor SB.

The controller C performs opening-closing control of the on-off valves V1 to V4 corresponding to being in operation and being shut down, and performs driving stop control of the feedwater pump 13. As for driving stop control of the feedwater pump 19, the controller C drives the feedwater pump 19 to generate pure water when a water level in the pure water tank 12 has fallen to or below a predetermined water level based on a detection result of a water level sensor SA therein. Optionally, the controller C may perform driving control of the feedwater pump 13 based on water levels in the oxygen-side gas-liquid separator 14 and the hydrogen-side gas-liquid separator 16.

The on-off valves V1, V2 may be switching valves or three-way valves instead of on-off valves. Similarly, the on-off valves V3, V4 may be switching valves or three-way valves instead of on-off valves.

### <Operation Control>

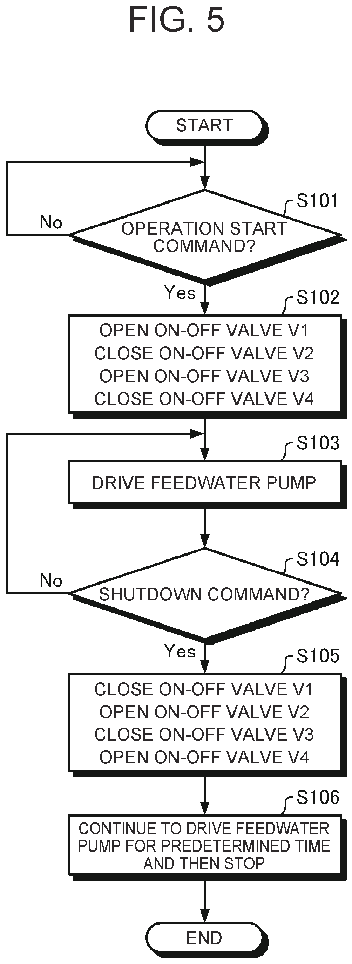

FIG. 5 is a flowchart showing an operation control procedure of the water electrolysis device 10 performed by the controller C. As shown in FIG. 5, first, the controller C determines whether an operation start command has been issued (step S101). When the operation start command has not been issued (step S101: No), this determination process is repeated. On the other hand, when the operation start command has been issued (step S101: Yes), the controller C opens the on-off valve V1, closes the on-off valve V2, opens the on-off valve V3, and closes the on-off valve V4 (step S102) to supply pure water to the oxygen flow passage 5. Thereafter, the controller C drives the feedwater pump 13 (step S103) to start operation.

Thereafter, the controller C determines whether a shutdown command including a shutdown determination has been issued (step S104). When the shutdown command has not been issued (step S104: No), the process moves to step S103 and the operation is continued. On the other hand, when the shutdown command has been issued (step S104: Yes), the controller C closes the on-off valve V1, opens the on-off valve V2, closes the on-off valve V3, and opens the on-off valve V4 (step S105) to supply pure water to the hydrogen flow passage 6 and discard pure water containing hydrogen peroxide. Thereafter, the controller C continues to drive the feedwater pump 13 for a predetermined time and then stops the driving (step S106), and ends the current process. The above-described process is repeatedly performed at regular intervals.

Each component illustrated in the above-described embodiment and modified examples schematically represents its function, and need not necessarily be physically configured as illustrated. That is, the form of dispersion or integration of devices is not limited to the illustrated one, and all or some of the devices can be configured to be functionally or physically dispersed or integrated in arbitrary units according to various loads, the state of use, etc.

### Industrial Applicability

The water electrolysis device and the operation control method of a water electrolysis device of the present invention are useful in curbing energy consumption during shutdown and mitigating deterioration of an electrolyte membrane due to hydrogen peroxide generated inside a cathode-side hydrogen flow passage during shutdown.

### Reference Signs List

1, 1A, 1B Water decomposition cell
2 Oxygen electrode
2a, 3a Diffusion layer
2b, 3b Catalyst layer
3 Hydrogen electrode
4 Electrolyte layer
5 Oxygen flow passage
5a Inlet opening
5b Outlet opening
6 Hydrogen flow passage
7, 8 Separator
9 Power source
10 Water electrolysis device
11 Pure water generator
12 Pure water tank
13, 19 Feedwater pump
14 Oxygen-side gas-liquid separator
15 Ion exchanger
16 Hydrogen-side gas-liquid separator
20 Hydrogen storage tank
30 Solar power generation device
C Controller
HE1, HE2 Heat exchanger
L1 to L13, L21, L22 Pipe
SA Water level sensor
SB Remaining amount sensor
V1 to V4 On-off valve

## Claims

1. A water electrolysis device having one or more water electrolysis cells that each have an anode-side oxygen flow passage and a cathode-side hydrogen flow passage separated from each other by an electrolyte membrane, and that electrically decompose pure water supplied to the oxygen flow passage and discharge hydrogen from the hydrogen flow passage, the water electrolysis device comprising:
a feedwater pump that delivers pure water;
an oxygen-side supply pipe that supplies pure water from the feedwater pump to the oxygen flow passage through a first on-off valve;
a hydrogen-side supply pipe that supplies pure water from the feedwater pump to the hydrogen flow passage through a second on-off valve; and
a controller that performs control that: during operation of the water electrolysis device, drives the feedwater pump and opens the first on-off valve while closing the second on-off valve to supply pure water to the oxygen flow passage through the oxygen-side supply pipe; and during shutdown of the water electrolysis device, closes the first on-off valve while opening the second on-off valve to stop the supply of the pure water to the oxygen flow passage through the oxygen-side supply pipe, and after supplying the pure water to the hydrogen flow passage through the hydrogen-side supply pipe for a predetermined time and discharging the pure water to an outside, stops the supply of the pure water to the hydrogen flow passage through the hydrogen-side supply pipe.

2. The water electrolysis device according to claim 1, wherein
a third on-off valve is provided on a hydrogen-side discharge pipe that connects an outlet side of the hydrogen flow passage; an external discharge pipe is connected between the outlet side of the hydrogen flow passage and the third on-off valve; and a fourth on-off valve is provided on the external discharge pipe, and
when supplying the pure water to the hydrogen flow passage during the shutdown, the controller switches the third on-off valve from an open position to a closed position and switches the fourth on-off valve from a closed position to an open position to discharge the pure water from the external discharge pipe to the outside.

3. The water electrolysis device according to claim 1,
wherein an oxygen-side discharge pipe connected to an outlet side of the oxygen flow passage is connected to an oxygen-side gas-liquid separator, and oxygen is discharged through the oxygen-side gas-liquid separator,
wherein a hydrogen-side discharge pipe connected to an outlet side of the hydrogen flow passage is connected to a hydrogen-side gas-liquid separator, and hydrogen is discharged through the hydrogen-side gas-liquid separator, and
wherein pure water supplied to the water electrolysis cells through the oxygen-side gas-liquid separator and the hydrogen-side gas-liquid separator circulates.

4. The water electrolysis device according to claim 1, wherein a plurality of water decomposition units that is stacked is connected in series to the water electrolysis cells.

5. The water electrolysis device according to any one of claims 1 to 3, wherein
a power source of the water electrolysis cells is a solar power generation device or a wind power generation device,
hydrogen discharged from the water electrolysis cells is stored in a hydrogen storage tank, and
the controller shuts down the water electrolysis device when a power shortage of power generated by the solar power generation device or the wind power generation device occurs or when a remaining amount in the hydrogen storage tank is equal to or larger than a predetermined amount.

6. An operation control method of a water electrolysis device having one or more water electrolysis cells that each have an anode-side oxygen flow passage and a cathode-side hydrogen flow passage separated from each other by an electrolyte membrane, and that electrically decompose pure water supplied to the oxygen flow passage and discharge hydrogen from the hydrogen flow passage, the operation control method comprising:
during operation of the water electrolysis device, supplying pure water to the oxygen flow passage; and
during shutdown of the water electrolysis device, stopping the supply of the pure water to the oxygen flow passage, and after supplying the pure water to the hydrogen flow passage for a predetermined time and discharging the pure water to an outside, stopping the supply of the pure water to the hydrogen flow passage.
